# FASCICULE DE BREVET EUROPEEN

(11) **EP 1 831 015 B1**
(45) Date de publication et mention de la délivrance du brevet: **10.03.2010**
(21) Numéro de dépôt: 05824591.1
(22) Date de dépôt: 06.12.2005
(51) Int. Cl.: B32B 27/00, A41D 27/06, A41D 31/02

(54) **COMPLEXE TEXTILE COMPRENANT UN SUBSTRAT D' ASSOCIATION ENDUIT SUR SES DEUX FACES**
AUF SEINEN BEIDEN SEITEN MIT EINEM KOMBINATIONSSUBSTRAT ÜBERZOGENER TEXTILKOMPLEX
TEXTILE COMPLEX COMPRISING A COMBINING SUBSTRATE COATED ON ITS TWO SIDES

(30) Priorité: 09.12.2004 FR 0413141
(43) Date de publication de la demande: 12.09.2007
(73) Titulaire: LAINIERE DE PICARDIE BC, 80202 Péronne Cédex (FR)
(72) Inventeur: LEFEBRE, Jean, c/o LAINIERE DE PICARDIE BC, F-80202 PERONNE CEDEX (FR); FESTINO, Vincent, c/o LAINIERE DE PICARDIE BC, F-80202 PERONNE CEDEX (FR)
(74) Mandataire: Sayettat, Julien Christian
(86) Numéro de dépôt international: PCT/FR2005/003057
(87) Numéro de publication internationale: WO 2006/061510

(56) Documents cités:
- EP-A- 0 219 378
- EP-A- 1 160 016
- US-A- 4 732 800
- US-A- 5 681 645

## Description

L'invention concerne un complexe textile comprenant deux couches textiles associées au moyen d'un substrat, un tel substrat d'association, un procédé de fabrication d'un tel substrat, un procédé de complexage d'un complexe selon l'invention ainsi qu'un article vestimentaire comprenant au moins une pièce découpée dans un tel complexe.

Elle s'applique typiquement à des complexes textiles destinés à la réalisation d'articles vestimentaires tels que des articles de lingerie ou des vêtements de sport.

Pour la réalisation de ces articles, mais également dans nombres d'autres applications finales, il est souvent nécessaire d'associer deux couches textiles entre elles de sorte notamment à combiner leurs propriétés respectives (aspect, confort, volume, stabilité, ...).

Pour ce faire, il est connu de pourvoir l'une des faces d'au moins une des couches textiles d'un réseau de produit thermocollant de sorte, par contrecollage, à assurer l'association voulue, voir par exemple US 5,681, 645.

Toutefois, certaines couches textiles, notamment celles utilisées dans les applications lingerie ou vêtements de sport, ne peuvent pas être enduites de façon satisfaisante avec un réseau de produit thermocollant. En particulier, une telle incapacité peut être due à la structure de la couche textile elle-même (structure trop ouverte, trop faible masse surfacique,...) ou encore à une mauvaise tenue de la couche textile lors des opérations d'enduction (tension, chaleur, mauvaise tenue des colorants, ...).

Pour tenter de résoudre ce problème, on a proposé d'utiliser un film ou une grille de produit thermofusible qui est interposé entre les deux couches textiles de sorte à assurer leur association, voir par exemple EP 1 160 016 A2.

Cette solution, bien que permettant de s'affranchir de l'enduction des couches textiles, présente notamment l'inconvénient d'induire des caractéristiques négatives pour le complexe formé par les deux couches. En particulier, on constate :
- un raidissement du complexe ce qui est préjudiciable à sa main ;
- une diminution de la respirabilité du complexe ce qui nuit à son confort ;
- un jaunissement du complexe dans le temps ce qui n'est pas esthétiquement satisfaisant.

L'invention vise en particulier à résoudre les problèmes mentionnés ci-dessus.

Un complexe textile comprend une première couche textile, une deuxième couche textile et un substrat d'association desdites couches textiles entre elles, ledit substrat comprenant une troisième couche textile sur chacune des faces de laquelle un réseau de produit thermocollant est enduit, ledit substrat étant interposé entre les première et deuxième couches textiles de sorte, par contrecollage de respectivement une face desdites couches textiles sur un réseau de produit thermocollant, à associer les première et deuxième couches textiles entre elles.

L'invention concerne un procédé de fabrication d'un tel substrat d'association comprenant une couche textile sur chacune des faces de laquelle un réseau de produit thermocollant est enduit, ledit procédé comprenant les étapes consistant à :
i) former la couche textile ;
ii) déposer sur un support de transfert un réseau de produit thermocollant ;
iii) chauffer ledit réseau sur le support à une température supérieure à la température de fusion du produit ;
iv) disposer ledit support de transfert portant le réseau chauffé en vis-à-vis d'une face de la couche textile de sorte à mettre en contact le réseau avec ladite face, les affinités respectives du support et de la couche textile pour le produit étant telles que le réseau est transféré depuis le support sur la face de la couche textile, et ce sans chauffage spécifique de ladite couche textile ;
v) exécuter une deuxième fois les étapes ii) à iv) de sorte à enduire l'autre face de la couche textile avec un autre réseau de produit thermocollant.

L'invention sera bien comprise grâce à la description donnée ci-dessous de divers modes de réalisation.

Le complexe textile comprend une première et une deuxième couches textiles qui sont associées entre elles. Les couches textiles peuvent être de tous types, notamment de ceux utilisés pour réaliser des articles de lingerie ou des vêtements de sport.

Au moins l'une des première et deuxième couches textiles présente une structure ouverte sur laquelle il n'est pas possible d'enduire de façon fiable un réseau de produit thermocollant. Par structure ouverte, on entend que le pouvoir couvrant de la couche est faible, c'est-à-dire qu'elle présente des zones ajourées. De telles structures ouvertes sont par exemple obtenues avec une armure dans laquelle les fils sont espacés de façon importante et/ou avec des fils de faible diamètre et/ou avec des couches de masse surfacique faible (par exemple comprise entre 20 g/m² et 200 g/m²). Dans des exemples particuliers, la couche textile à structure ouverte est formée d'un tricot, de dentelle ou de tulle.

Toutefois, la mise en oeuvre est également avantageuse pour d'autre types de couches textiles, par exemple non tissés, tissés ou tricotés, en particulier lorsque la couche textile n'est pas adaptée pour recevoir une enduction de produit thermocollant, notamment dans le cas où l'enduction traverserait la couche textile de façon importante.

Pour réaliser les couches textiles, on peut utiliser des fils à base de matériaux naturels tels que le coton ou à base de matériaux synthétiques tels que le polyamide, le polyester ou le polypropylène. Les fils utilisés peuvent également présenter des propriétés mécanique spécifiques telles que l'élasticité ou la nervosité, par exemple les fils peuvent être à base d'élasthanne. En outre, des fils de nature différente peuvent être utilisés dans une même couche textile de sorte à combiner leur caractéristiques propres.

Pour réaliser l'association des première et deuxième couches textiles, il est prévoit d'utiliser un substrat d'association qui est interposé entre lesdites couches textiles de sorte à assurer leur association. Pour ce faire, le substrat comprend une troisième couche textile dont chacune des faces est enduite avec un réseau de produit thermocollant. Ainsi, l'association des première et deuxième couches textiles est réalisée par contrecollage de respectivement une face desdites couches textiles sur un réseau de produit thermocollant. Le complexe obtenu est donc formé d'un empilement de couches textiles, ce qui permet de conserver une main satisfaisante.

La couche textile peut être de tous types connus, identique ou non à l'une des première ou deuxième couches textiles à associer. La couche textile du substrat est formée d'un tricot, éventuellement bloqué.

Notamment dans ce dernier cas, l'utilisation du substrat d'association permet, outre l'aspect d'assemblage, de structurer le complexe en bloquant et/ou en renforçant certaines parties de celui-ci. Le substrat d'association peut être agencé pour permettre la conservation des caractéristiques textiles initiales des première et deuxième couches textiles, notamment en terme d'élasticité et de toucher.

La couche textile du substrat d'association présente une masse surfacique faible, par exemple comprise entre 10 g/m² et 50 g/m², de sorte à obtenir un complexe textile relativement léger comme cela est notamment souhaitable dans les applications spécifiques envisagées.

Concernant le réseau de produit thermocollant, on peut prévoir que le produit des deux réseaux soit le même, par exemple à base de copolyamide thermofusible. En outre, chaque réseau peut se présenter sous la forme de points de produit qui sont répartis de façon régulière sur la face de la couche textile de sorte à combiner adhésion et respirabilité du complexe, notamment vis-à-vis de l'air et de la vapeur d'eau. En variante, le réseau de produit thermocollant peut être réalisé sous la forme d'autre types de zones individualisées non continu, notamment sous la forme de lignes ou d'autres motifs bidimensionnels.

Le complexe est plus particulièrement destiné à être découpé de sorte à former au moins une pièce d'un article vestimentaire, notamment un article de lingerie ou vêtement de sport.

On décrit ci-dessous, un procédé de réalisation d'un substrat d'association selon l'invention dans lequel la couche textile est d'abord formée de façon conventionnelle par des techniques de tissage, de tricotage ou de formation d'un non-tissé.

Ensuite, l'invention prévoit d'enduire les faces de la couche textile au moyen d'un procédé d'enduction dans lequel la couche textile n'est pas spécifiquement chauffée, de sorte à conserver à ladite couche l'essentiel de ses propriétés.

A cet effet, le réseau de produit thermocollant est déposé sur un support de transfert, puis ledit réseau sur le support est chauffé à une température supérieure à la température de fusion du produit. En particulier, le dépôt du produit thermocollant sur le support peut être réalisé par sérigraphie ou par héliographie.

De façon générale, la température de chauffage est comprise entre 90°C et 215°C, ce qui permet la fusion et le séchage de la plupart des produits thermocollants utilisés pour l'enduction de couches textiles. Dans un exemple de réalisation, le produit thermocollant est à base de copolymère tel que le copolyamide et/ou le copolyester et/ou d'autres copolymères thermoplastiques ou thermodurcissables. Le produit thermocollant peut être prévu en dispersion aqueuse et/ou alcoolique et/ou autre solvant polaire, et se présenter à température ambiante sous la forme d'une pâte.

Ensuite, le support de transfert portant le réseau chauffé est disposé en vis-à-vis de la face de la couche textile à enduire de sorte à mettre le réseau en contact avec ladite face. Ainsi, en ajustant les affinités respectives dudit support et de ladite couche textile, il est possible de permettre le transfert du réseau depuis le support de transfert sur la face de la couche textile. Le transfert peut être réalisé sur l'ensemble de la face de la couche textile ou seulement sur une partie définie de celle-ci.

Selon une réalisation décrite dans le document EP-A-0 219 378, le support de transfert est formé d'une bande sans fin, dont la surface est par exemple recouverte d'un agent de faible adhérence vis-à-vis du produit thermocollant, par exemple à base de polytétrafluoroethylène ou de silicone. La bande est déplacée par défilement continu depuis une zone amont dans laquelle le réseau est disposé sur la bande, vers une zone de convergence dans laquelle la mise en contact est réalisée. Ainsi, le réseau peut être chauffé lors du déplacement entre la zone amont et la zone de convergence, par exemple par passage dans un four ou par exposition à un rayonnement (infrarouge ou micro-ondes) ou à un flux d'air chaud, de sorte à assurer le séchage et la mise en fusion du produit thermocollant.

Dans ce mode de réalisation, il est possible de déplacer conjointement la couche textile et le support de transfert de sorte à réaliser l'enduction en continu sur une longueur de couche textile.

Dans le procédé d'enduction utilisé, il est également possible de prévoir que la dimension de la zone de convergence soit agencée pour permettre la réalisation du transfert par application d'un effort d'écrasement du réseau sur la face de la couche textile, ledit effort étant agencé pour permettre l'association du réseau sur ladite face sans pénétration importante du produit dans la couche textile. En particulier, l'écartement entre la couche textile et le support peut être sensiblement égal à la hauteur du réseau. Ainsi, le transfert étant réalisé par contact et non par pressage, la couche textile n'est pas imprégné de façon trop importante avec le produit thermocollant, ce qui évite le phénomène de traversée dudit produit au travers de la couche textile et permet donc de conserver une main satisfaisante pour ladite couche textile enduite tout en assurant une adhésion satisfaisante.

En variante, on peut également prévoir, postérieurement au transfert du réseau sur la couche textile, de refroidir ladite couche, par exemple par soufflage d'air, de sorte à assurer la solidification du produit de façon plus rapide que par convexion naturelle. Ainsi, le temps de contact entre le produit chauffé et la couche textile peut être réduit, ce qui limite le possible endommagement de la couche textile qui pourrait en résulter.

L'invention prévoit d'utiliser un procédé d'enduction analogue à celui décrit ci-dessus de sorte à enduire l'autre face de la couche textile avec un autre réseau de produit thermocollant. Selon une réalisation, les deux enductions sont réalisées successivement par double passage de la couche textile dans l'installation d'enduction. Selon une autre réalisation, au moins certaines étapes des deux enductions, notamment le refroidissement, peuvent être réalisées sensiblement simultanément.

Pour réaliser la double enduction en continu, la couche textile peut être enroulée sur une bobine amont, déroulée en continu, enduite sur ses deux faces et rembobinée sur une bobine aval.

L'utilisation d'un procédé d'enduction tel que celui décrit ci-dessus permet d'enduire des réseaux de masse surfacique faible (par exemple compris entre 5 g/m² et 20 g/m²), et d'obtenir des réseaux de produit thermocollant qui après contrecollage sur les couches textiles sont quasiment invisibles de sorte à éviter un aspect de marquage des faces du complexe.

On donne ci-dessous un exemple de réalisation d'un complexe textile.
Substrat d'association :
   Couche textile : base polyamide bi-strech
   Masse surfacique : 20 g/m²
   Enduction : copolyamide thermofusible (point de fusion 120°C) ; Réseau de point de masse surfacique 8 g/m² par face
Première couche textile :
   Base polyamide / élasthanne (80% / 20%)
   Masse surfacique : 180 g/m²
Deuxième couche textile:
   Base polyamide / élasthanne (85% /15%)
   Masse surfacique : 115 g/m²

Le complexage est réalisé à 130°C sur une presse à contrecoller en continu.

## Revendications

1. Procédé de fabrication d'un substrat d'association comprenant une couche textile sur chacune des faces de laquelle un réseau de produit thermocollant est enduit, ledit procédé comprenant les étapes consistant à :
i) former la couche textile ;
ii) déposer sur un support de transfert un réseau de produit thermocollant ;
iii) chauffer ledit réseau sur le support à une température supérieure à la température de fusion du produit :
iv) disposer ledit support de transfert portant le réseau chauffé en vis-à-vis d'une face de la couche textile de sorte à mettre en contact le réseau avec ladite face, les affinités respectives du support et de la couche textile pour le produit étant telles que le réseau est transféré depuis le support sur la face de la couche textile, et ce sans chauffage spécifique de ladite couche textile;
v) exécuter une deuxième fois les étapes ii) à iv) de sorte à enduire l'autre face de la couche textile avec un autre réseau de produit thermocollant.

2. Procédé de fabrication selon la revendication 1, **caractérisé en ce que** les deux enductions sont réalisées successivement.

3. Procédé de fabrication selon la revendication 1, **caractérisé en ce qu'**au moins certaines étapes des deux enductions sont réalisées sensiblement simultanément.

4. Procédé de fabrication selon l'une quelconque des revendications 1 à 3, **caractérisé en ce que**, pour la mise en contact du réseau avec la face de la couche textile, la couche textile et/ou le support de transfert sont déplacés vers une zone de convergence.

5. Procédé de fabrication selon la revendication 4, **caractérisé en ce que** le réseau est déposé sur la face de la couche textile dans une zone amont à la zone de convergence, le chauffage du produit étant réalisé lors du déplacement entre lesdites zones.

6. Procédé de fabrication selon la revendication 5, **caractérisé en ce que** le support de transfert est formé d'une bande, le déplacement étant réalisé par défilement continu depuis la zone amont vers la zone de convergence.

7. Procédé de fabrication selon l'une quelconque des revendications 4 à 6, **caractérisé en ce que** la couche textile et le support de transfert sont déplacés conjointement de sorte à réaliser l'enduction en continu sur une longueur de la couche textile.

8. Procédé de fabrication selon l'une quelconque des revendications 4 à 7, **caractérisé en ce que** la dimension de la zone de convergence est agencée pour permettre la réalisation, du transfert par application d'un effort d'écrasement du réseau sur la face de la couche textile, ledit effort étant agencé pour permettre l'association du réseau sur ladite face sans pénétration importante du produit dans la couche textile.

9. Procédé de fabrication selon l'une quelconque des revendications 1 à 8, **caractérisé en ce que** le support de transfert est chauffé à une température comprise entre 90°C et 215°C.

10. Procédé de fabrication selon l'une quelconque des revendications 1 à 9, **caractérisé en ce que**, postérieurement au transfert d'un réseau, la couche textile est refroidie de sorte à assurer la solidification du produit dudit réseau.

11. Procédé de fabrication selon l'une quelconque des revendications 1 à 10,
**caractérisé en ce que** la couche textile est formée d'un tricot, éventuellement bloqué.

12. Procédé de fabrication selon l'une quelconque des revendications 1 à 11,
**caractérisé en ce que** la couche textile présenté une masse surfacique comprise antre 10 g/m² et 50 g/m².

13. Procédé de fabrication selon l'une quelconque des revendications 1 à 12, **caractérisé en ce que** le produit thermocollant des deux réseaux est le même, par exemple à basa de copolyamide thermofusible.

14. Procédé de fabrication selon l'une quelconque des revendications 1 à 13, **caractérisé en ce que** chaque réseau se présente sous la forme de points de produit qui sont répartis de façon régulière sur la face de la couche textile.

## Claims

1. Method for producing an association substrate comprising a textile layer coated on each of the faces thereof with a heat-sealing substance lattice, said method comprising steps consisting of:
i) forming the textile layer;
ii) depositing a heat-sealing substance lattice on a transfer substrate;
iii) heating said lattice on the substrate to a temperature above the melting point of the substance;
iv) arranging said transfer substrate comprising the heated lattice opposite one face of the textile layer so as to place the lattice in contact with said face, the respective affinities of the substrate and the textile layer for the substance being such that the lattice is transferred from the substrate onto the face of the textile layer, without specific heating of said textile layer;
v) performing steps ii) to iv) a second time so as to coat the other face of the textile layer with a further heat-sealing substance lattice.

2. Production method according to claim 1, **characterised in that** both coatings are performed in succession.

3. Production method according to claim 1, **characterised in that** at least some steps of both coatings are performed substantially simultaneously.

4. Production method according to any of claims 1 to 3, **characterised in that**, in order to place the lattice in contact with the face of the textile layer, the textile layer and/or the transfer substrate are moved to a convergence zone.

5. Production method according to claim 4, **characterised in that** the lattice is deposited on the face of the textile layer in an upstream zone from the convergence zone, the substance being heating during the movement between said zones.

6. Production method according to claim 5, **characterised in that** the transfer substrate is formed from a strip, the movement being performed by means of continuous feed from the upstream zone to the convergence zone.

7. Production method according to any of claims 4 to 6, **characterised in that** the textile layer and the transfer substrate are moved jointly so as to perform the continuous coating over a length of the textile layer.

8. Production method according to any of claims 4 to 7, **characterised in that** the dimension of the convergence zone is arranged to,enable the completion of the transfer by applying a compression load of the lattice onto the face of the textile layer, said load being arranged to enable the association of the lattice on said face without significant penetration of the substance in the textile layer.

9. Production method according to any of claims 1 to 8, **characterised in that** the transfer substrate is heated to a temperature between 90°C and 215°C.

10. Production method according to any of claims 1 to 9, **characterised in that**, following the transfer of a lattice, the textile layer is cooled so as to ensure the solidification of the substance of said lattice.

11. Production method according to any of claims 1 to 10, **characterised in that** the textile layer is formed from a knit fabric, optionally interlock knit fabric.

12. Production method according to any of claims 1 to 11, **characterised in that** the textile layer has a mass per unit area between 10 g/m² and 50 g/m².

13. Production method according to any of claims 1 to 12, **characterised in that** the heat-sealing substance of both lattices is the same, for example based on hot-melt copolyamide.

14. Production method according to any of claims 1 to 13, **characterised in that** each lattice is presented in the form of points of substance distributed regularly on the face of the textile layer.

## Patentansprüche

1. Verfahren zur Herstellung eines Kombinationssubstrats, umfassend eine Textilschicht auf beiden Seiten mit einem Netz aus heisssiegelbarem Produkt überzogen, wobei das Verfahren die folgenden Schritte einschließt, umfassend:
i) Bilden der Textilschicht;
ii) Ablegen eines Netzes aus heisssiegelbarem Produkt auf einem Übertragungssupport;
iii) Erwärmen des Netzes auf dem Support auf eine höhere Temperatur als diejenige der Fusion des Produktes;
iv) Anordnen des Übertragungssuppports mit dem erwärmten Netz gegenüber einer Seite der Textilschicht, um das Netz mit der Seite in Kontakt zu bringen, wobei die entsprechenden Affinitäten des Supports und der Textilschicht für das Produkt derartig sind, dass das Netz vom Support auf die Seite der Textilschicht übertragen wird, und dies ohne spezifisches Erwärmen der Textilschicht;
v) ein zweites Durchführen der Schritte ii) bis iv), um die andere Seite der Textilschicht mit einem anderen Netz aus heisssiegelbarem Produkt zu überziehen.

2. Verfahren zur Herstellung nach Anspruch 1, **dadurch gekennzeichnet, dass** die zwei Überzüge aufeinander folgend durchgeführt werden.

3. Verfahren zur Herstellung nach Anspruch 1, **dadurch gekennzeichnet, dass** mindestens bestimmte Schritte der zwei Überzüge im Wesentlichen gleichzeitig durchgeführt werden.

4. Verfahren zur Herstellung nach einem der Ansprüche 1 bis 3, **dadurch gekennzeichnet, dass** zum In-Kontakt-Bringen des Netzes mit der Seite der Textilschicht die Textilschicht und/oder der Übertragungssupport in den Konvergenzbereich verschoben werden.

5. Verfahren zur Herstellung nach Anspruch 4, **dadurch gekennzeichnet, dass** das Netz auf der Seite der Textilschicht in einem Bereich abgelegt wird, der dem Konvergenzbereich vorgelagert ist, wobei das Erwärmen des Produktes bei der Verschiebung zwischen den Bereichen durchgeführt wird.

6. Verfahren zur Herstellung nach Anspruch 5, **dadurch gekennzeichnet, dass** der Übertragungssupport aus einem Streifen gebildet ist, wobei die Verschiebung durch den ununterbrochenen Durchlauf vom vorgelagerten Bereich zum Konvergenzbereich durchgeführt wird.

7. Verfahren zur Herstellung nach einem der Ansprüche 4 bis 6, **dadurch gekennzeichnet, dass** die Textilschicht und der Übertragungssupport zusammen verschoben werden, um den Überzug ununterbrochen auf einer Länge der Textilschicht durchzuführen.

8. Verfahren zur Herstellung nach einem der Ansprüche 4 bis 7, **dadurch gekennzeichnet, dass** die Größe des Konvergenzbereichs eingestellt wird, um die Durchführung der Übertragung durch Anwendung einer Quetschkraft des Netzes auf die Seite der Textilschicht zu ermöglichen, wobei die Kraft eingestellt wird, um die Kombination des Netzes auf der Seite ohne bedeutende Eindringung des Produktes in die Textilschicht zu ermöglichen.

9. Verfahren zur Herstellung nach einem der Ansprüche 1 bis 8, **dadurch gekennzeichnet, dass** der Übertragungssupport auf eine Temperatur zwischen 90 °C und 215 °C erwärmt wird.

10. Verfahren zur Herstellung nach einem der Ansprüche 1 bis 9, **dadurch gekennzeichnet, dass** nach der Übertragung eines Netzes die Textilschicht abgekühlt wird, um die Erstarrung des Produktes des Netzes sicherzustellen.

11. Verfahren zur Herstellung nach einem der Ansprüche 1 bis 10, **dadurch gekennzeichnet, dass** die Textilschicht aus einem Trikotstoff gebildet ist, eventuell blockiert.

12. Verfahren zur Herstellung nach einem der Ansprüche 1 bis 11, **dadurch gekennzeichnet, dass** die Textilschicht eine Dichte zwischen 10 g/m² et 50 g/m² aufweist.

13. Verfahren zur Herstellung nach einem der Ansprüche 1 bis 12, **dadurch gekennzeichnet, dass** das heisssiegelbare Produkt der zwei Netze das Gleiche ist, z.B. auf der Grundlage von heissschmelzendem Copolyamid.

14. Verfahren zur Herstellung nach einem der Ansprüche 1 bis 13, **dadurch gekennzeichnet, dass** jedes Netz in Form von Produktpunkten vorliegt, die regelmäßig auf der Seite der Textilschicht verteilt sind.
